# EUROPEAN PATENT SPECIFICATION

(11) **EP 4 592 873 B1**
(45) Date of publication and mention of the grant of the patent: **30.09.2026**
(21) Application number: 24154376.8
(22) Date of filing: 29.01.2024
(51) Int. Cl.: G06F 21/12

(54) **A METHOD AND A DEVICE FOR PROTECTING A SOFTWARE PROGRAM RUNNING ON A HARDWARE COMPONENT**
VERFAHREN UND VORRICHTUNG ZUM SCHUTZ EINES AUF EINER HARDWAREKOMPONENTE LAUFENDEN SOFTWAREPROGRAMMS
MÉTHODE ET DISPOSITIF DE PROTECTION D'UN PROGRAMME LOGICIEL S'EXÉCUTANT SUR UN COMPOSANT MATÉRIEL

(43) Date of publication of application: 30.07.2025
(73) Proprietor: Diebold Nixdorf Systems GmbH, 33106 Paderborn (DE)
(72) Inventor: ROSSI, Rainer, 33129 Delbrück-Bentfeld (DE); VON DER LIPPE, Carsten, 33098 Paderborn (DE)
(74) Representative: Viering, Jentschura & Partner mbB Patent- und Rechtsanwälte

(56) References cited:
- CN-A- 109 753 341
- US-A1- 2003 046 566
- US-A1- 2013 014 221

## Description

### Technical Field

Various embodiments relate generally to a method of protecting a software program and to a hardware component with protected software program.

### Background

Many security features involving a dongle are relying on a possession of a piece of hardware (usually the "dongle").

Thus, they only permit using certain features or functions only if the dongle is in possession.

However, there is some room for cheating, since most of these security systems only check if the dongle is possessed (e. g., provided), but not if it is locally provided/available.

Thus, one way to cheat is to make the dongle remotely available, which may lead to a situation in which several users, e. g., anywhere in the world, may be able to use the dongle-protected soft- or hardware either simultaneously or directly subsequently, which is usually not the intended business case.

In one example, a user who owns a single CrypT A dongle may extend its usage via a network connection, such that the dongle can be used for more service cases than would be achievable by the single user travelling around and using it subsequently in different places. US2003046566A1 relates to protecting a software program against unauthorized use by binding software execution to one or more hardware devices that have unique, unalterable identifiers.

### Summary

A method of protecting a software program installed on a first hardware component from unauthorized use is provided. The method includes collecting information on device setting parameters, device drivers and/or software programs installed on and/or presently run by the first hardware component, determining whether the collected information indicates that the first hardware component is configured to establish a data connection only to a local hardware interface that is connectable with a predefined type of hardware component, and only if the establishable data connection only to a local hardware interface is determined: identifying a second hardware component of the predefined type that is locally connected to the first hardware component, retrieving startup information and/or functions from the second hardware component, and starting the protected software program using the retrieved startup information and/or functions.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a flow diagram of a method of protecting a software program in accordance with various embodiments; and
FIG. 2 shows a schematic illustration of a first hardware component with a protected software program in accordance with various embodiments.

### Description

The following detailed description refers to the accompanying drawings that show, by way of illustration, specific details and embodiments in which the invention may be practiced.

In various embodiments, a system of hard- and software is provided for protecting a further (e. g., chargeable) software from use by unauthorized persons.

The embodiments may include that the protected software is installed on a first hardware component (for example, on a personal computer (PC)) or the like, to which a second hardware component (e. g., a dongle) may be connectable, e. g. via a hardware interface. The second hardware component may be configured to provide information (e. g., keys) and/or functions (e. g., cryptographic functions) that may be required for successfully operating the protected software.

For ensuring that only the first hardware component, to which the second hardware component may be physically connected (e. g., via the hardware interface, as opposed to being remotely connected, e. g., via a network), is able to set the protected software to an executable state, one or more software functions may be employed.

In various embodiments, a software architecture of the first hardware component may be analyzed to determine whether general drivers that may allow for a remote access are installed on the first hardware component. Such drivers may be entered into a blacklist of forbidden drivers.

Alternatively, or additionally, drivers assigned to a known interface may be analyzed to determine whether they only include drivers that allow for only a local access to the second hardware component. Such (permitted) drivers may be entered into a whitelist of permitted drivers.

Further alternatively or additionally, information that may be provided by the second hardware component to the first hardware component, on which the the protected software may be installed, may be analyzed.

The information may for example include information regarding an interface (e. g., USB-related information). The analysis may for example include checking whether the interface information matches information that is expected if the known (e. g., permitted) interface was used.

If any of the software functions results in a possiblity that the second hardware component is remotely connected (e. g., rather than a physical direct connection) to the first hardware component, for example by having a blacklisted driver for remote access installed, and/or a driver that is assigned to the interface is not included in the whitelist, and/or the interface-related information provided together with data does not match the expected information, a predefined action may be taken.

Predefined actions may include refusing to start execution of the protected software, stopping execution of the protected software, raising an alarm, activating a payment function that provides a possibility for additional payments, etc.

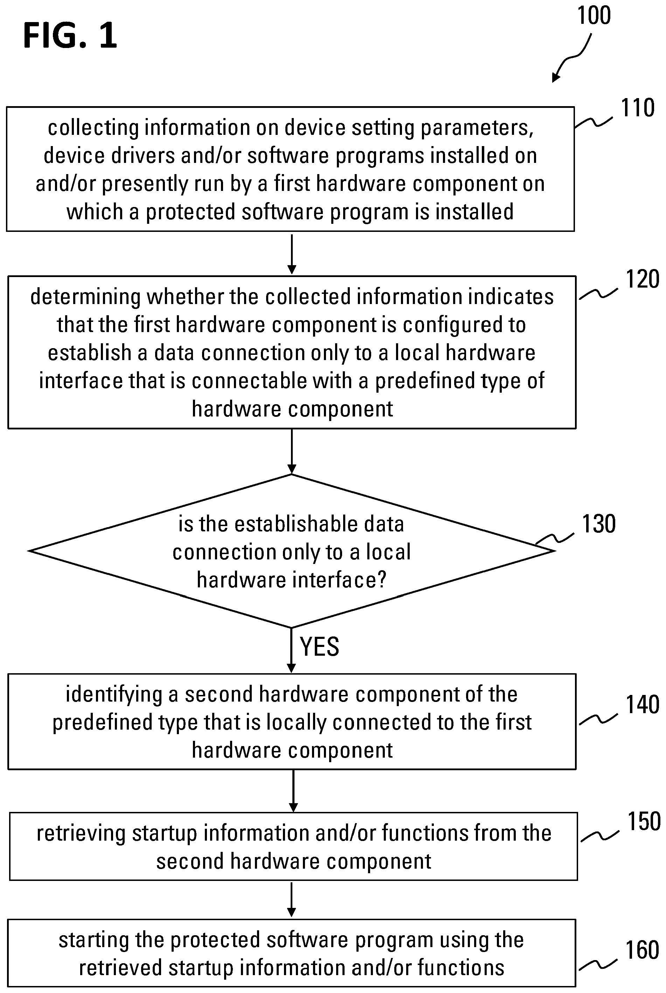

FIG. 1 shows a flow diagram 100 of a method of protecting a software program in accordance with various embodiments.

The software program, also referred to as the protected software program or the protected program, may be installed on a first hardware component, and may be protected from unauthorized use.

Unauthorized use in this context may, besides use without authorization, in particular refer to a use with an authorization that is provided from a remote location, rather than from a second hardware component that is locally connected to the first hardware component.

The method includes collecting information on device setting parameters, device drivers and/or software programs installed on and/or presently run by the first hardware component (110).

Device setting parameters may for example include or consist of any, some, or all of the following: a USB Host Controller, a USB Device Location Info, a USB Device Location, a Location Info of another Human Interface Device, and a Location Paths of another Human Interface Device.

Device drivers may for example include or consist of entries in a device object tree and/or a driver stack related to the second hardware component.

Software programs installed on the first hardware component may include executable files of software programs or executable links to software programs that are temporarily or permanently stored on any storage device that is part of or directly connected to the first hardware component, and/or in one or more predefined folders or storage devices. The storage devices may for example include a main memory, e. g., a hard disk or solid state drive, auxiliary internal memory devices, and external memory devices, for example magnetic, optical and/or flash memory devices that may be connected to the first hardware component via an interface, e. g., a port, a bus, etc.

Software programs presently run by the first hardware component may include any foreground and/or background process or task reported by a (e. g., Windows) task manager or the like as being presently run.

The method may further include determining whether the collected information indicates that the first hardware component is configured to establish a data connection only to a local hardware interface that is connectable with a predefined type of hardware component (120).

A local hardware interface in this context may be understood as being integrated into or directly connected (e. g., via a port and/or a cable or the like) to the first hardware component.

Or, to turn around the analysis, it may be determined whether there is indication that the first hardware component is configured to establish a data connection to a remote hardware interface that is connectable with a predefined type of hardware component.

A remote hardware interface in this context may be understood as any kind of hardware interface that is not a local hardware interface, in particular a hardware interface that is connected to the first hardware interface via a wireless connection, via a remote server, or the like.

The determining whether the collected information indicates that the first hardware component is configured to establish a data connection only to a local hardware interface that is connectable with a predefined type of hardware component may include at least one of the following:
- Comparing the collected information with a whitelist of allowed device setting parameters, device drivers and/or software programs. The whitelist may include at least one device setting parameter and/or at least one program that is used for establishing the data connection to the local hardware interface.
   It is to be understood that the device setting parameters in the whitelist may be specified as a pattern using wildcards/placeholders, rather than specifying any possible parameter as an individual entry in the list.
- Comparing the collected information with a blacklist of forbidden device setting parameters, device drivers and/or software programs to indicate that the first hardware component is configured to establish a data connection with an external hardware interface that is connectable with a predefined type of hardware component.
   It is to be understood that the device setting parameters in the blacklist may be specified as a pattern using wildcards/placeholders, rather than specifying any possible parameter as an individual entry in the list.
- Comparing location information that is part of the USB information with a predefined (expected) pattern.

The whitelist may include the following:

| Parameter/Type | Value |
|---|---|
| USB Host Controller Device Path | \\?\pci#ven_xxxx&dev_yyyy&subsys_zzzz&rev_nn#... |
| USB Device Location Info | Port_#xxxx.Hub_#yyyy |
| USB Device Location Info | aaaa.bbbb.cccc.ddd.eee.fff.ggg.hhh.iii |
| USB Device Location Paths | PCIROOT(w)#PCI(x)#USBROOT(y)#USB(z) |

Examples of strings that would be identified as compatible with whitelist values of the corresponding parameters include the following:
USB Host Controller:
   Device path: \\?\pci#ven_8086&dev_02ed&subsys_09a11028&rev_00#...
Dongle as mass storage device (MSD):
   Location Info: Port#0004.Hub_#0004
   Location Paths: PCIROOT(0)#PCI(1400)#USBROOT(0)#USB(3)
Dongle as human interface device (HID):
   Location Info: Port#0004.Hub_#0004
   Location Paths: PCIROOT(0)#PCI(1400)#USBROOT(0)#USB(3)
Other local HID devices:
   Location Info: 0000.0014.0000.001.002.003.000.000.000
   Location Paths: PCIROOT(0)#PCI(1400)#USBROOT(0)#USB(3)

The blacklist may include the following:

| Parameter/Type | Value |
|---|---|
| USB Host Controller Device Path string | including "\\?\root..." |
| USB Device Location Info | SEH myUTN,CodeMeter-Stick M |
| USB Device Location Info | WIBU-Systems AG CodeMeter-Stick M |
| Software | SEH UTN Manager |
| Software | Fabula Tech |

Comparing location information that is part of the USB information with a pre-defined (expected) pattern may in some cases be a straightforward way for identifying an unauthorized use of the protected software, because a certain pattern may be expected for the given hardware/software setup. For example, in the intended usage inside the product ProBase/C, the location information that is part of the USB information will be expected to have a certain pre-defined pattern/value/string. The dongle will only be accepted if the location information matches this particular pattern/value/string.

The method may further include, only if the establishable data connection only to a local hardware interface is determined (130): identifying a second hardware component of the predefined type that is locally connected to the first hardware component (140), retrieving startup information and/or functions from the second hardware component (150), and starting the protected software program using the retrieved startup information and/or functions (160).

Processes 140 to 160 may essentially be similar or identical to state-of-the-art processes that may be executed when a software is not protected by the method of various embodiments. In other words, once it is determined that the second hardware component is actually locally connected to the first hardware component, the protected software may be started and used like in the prior art, e. g., by determining where startup information (e. g., an authorization for using the software) is to be retrieved, e. g. from the second hardware device, e. g., a USB dongle or for example a DVD, a chip card, or another type of storage device, retrieving the startup information, e. g., an authorization like for example a key, from the second hardware device, and finally starting the protected software program.

If, on the other hand, it is determined that the second hardware component may be remotely connected, or if it is indeterminable whether the second hardware component is remotely or locally connected, a predetermined action may be taken. For example, an execution of the protected software may be prohibited, a warning may be issued and/or a payment scheme may be activated that may allow a temporary access to the software upon payment of a fee.

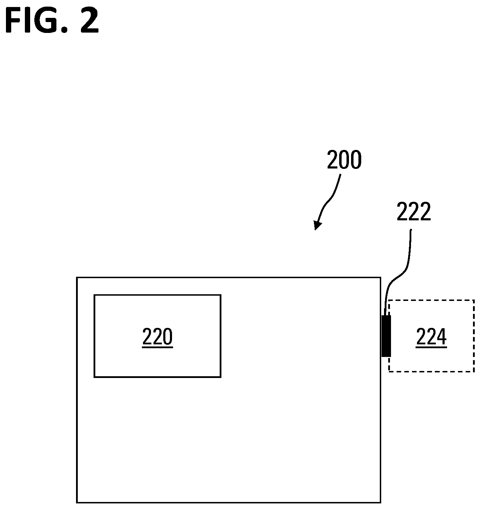

FIG. 2 shows a schematic illustration of a hardware component 200 with a protected software program in accordance with various embodiments.

The hardware component 200 may be configured to collect information on device setting parameters, device drivers and/or software programs installed on and/or presently run by the hardware component 200.

The hardware component 200 may for example include or consist of a personal computer like for example a desktop computer or a laptop, a tablet, or the like. The hardware component 200 may correspond to the above first hardware component.

The hardware component 200 may for example include at least one processor 220, for example a central processor or a group of processors, configured for the following: determining whether the collected information indicates that the hardware component is configured to establish a data connection only to a local hardware interface that is connectable with a predefined type of second hardware component 224, e. g., via an interface 222, and only if the establishable data connection only to a local hardware interface is determined: to identify a second hardware component of the predefined type that is locally connected to the hardware component, to retrieve startup information and/or functions from the second hardware component, and to start the protected software program using the retrieved startup information and/or functions, for example as described above.

The second hardware component 220 may for example be or include a USB dongle, a DVD, a chip card, or any other locally provided storage device that may be configured to locally provide an authorization for using the protected software.

## Claims

1. A method (100) of protecting a software program installed on a first hardware component (200) from unauthorized use, the method, performed on the first hardware component, comprising:
collecting (110) information on device setting parameters, device drivers and/or software programs installed on and/or presently run by the first hardware component; (200);
determining whether (120) the collected information indicates that the first hardware component is configured to establish a data connection only to a local hardware interface (222) that is connectable to a predefined type of hardware component; and
only if it is determined that a data connection only to a local hardware interface can be established
• identifying (140) a second hardware component (224) of the predefined type that is locally connected to the first hardware component;
• retrieving (150) startup information and/or functions from the second hardware component; and
• starting (160) the protected software program using the retrieved startup information and/or functions.

2. The method of claim 1,
wherein the determining comprises comparing the collected information with a whitelist of allowed device setting parameters, device drivers and/or software programs.

3. The method of claim 2,
wherein the whitelist comprises at least one device setting parameter and/or at least one program that is used for establishing the data connection to the local hardware interface.

4. The method of claim 2 or 3,
wherein the whitelist comprises at least one of a group of device setting parameters, the group comprising or consisting of:
• an USB Host Controller Device Path matching the pattern: \\?\pci#ven_xxxx&dev_yyyy&subsys_zzzz&rev_nn#...;
• an USB Device Location Info matching the pattern: Port_#xxxx.Hub_#yyyy;
• an USB Device Location Info matching the pattern: aaaa.bbbb.cccc.ddd.eee.fff.ggg.hhh.iii;
• an USB Device Location Paths matching the pattern: PCIROOT(w)#PCI(x)#USBROOT(y)#USB(z).

5. The method of any of claims 1 to 4,
wherein the determining comprises comparing the collected information with a blacklist of forbidden device setting parameters, device drivers and/or software programs to indicate that the first hardware component is configured to establish a data connection with an external hardware interface that is connectable to a predefined type of hardware component.

6. The method of claim 5,
wherein the blacklist comprises at least one device setting parameter and/or at least one program that is used for establishing the data connection to a remote or virtual hardware interface.

7. The method of any of claims 1 to 6,
wherein the determining comprises comparing a USB Host Controller Device Path as the collected information with a predefined pattern for a local USB Host Controller, and/or with a predefined pattern for a remote or virtual USB Host Controller.

8. The method of claim 7, further comprising:
comparing a USB Location Info and/or a Location Paths as the collected information with a respective predefined pattern for a local USB Host Controller, and/or with a predefined pattern for a remote or virtual USB Device.

9. The method of any of claims 1 to 8,
wherein the local hardware interface is integrated into or directly connected to the first hardware component.

10. The method of any of claims 1 to 9,
wherein the startup information includes an access key to the protected software program.

11. Hardware component (200) with protected software program, configured to:
collect information on device setting parameters, device drivers and/or software programs installed on and/or presently run by the hardware component;
determine whether the collected information indicates that the first hardware component is configured to establish a data connection only to a local hardware interface (222) that is connectable to a predefined type of hardware component; and
only in a case that if it is determined that a data connection only to a local hardware interface can be established
• identify a second hardware component (224) of the predefined type that is locally connected to the hardware component;
• retrieve startup information and/or functions from the second hardware component; and
• start the protected software program using the retrieved startup information and/or functions.

12. The hardware component of claim 11,
wherein the startup information includes an access key to the protected software program.

13. The hardware component of claim 11 or 12,
wherein the predefined hardware device is a Universal Serial Bus, USB, dongle.

## Patentansprüche

1. Ein Verfahren (100) zum Schützen eines auf einer ersten Hardwarekomponente (200) installierten Softwareprogramms vor unautorisiertem Nutzen, das Verfahren durchgeführt auf der ersten Hardwarekomponente aufweisend:
Sammeln (110) von Informationen bezüglich Geräteeinstellungsparametern, Gerätetreibern und/oder Softwareprogrammen, die installiert sind auf und/oder gegenwärtig ausgeführt werden durch der/die erste(n) Hardwarekomponente (200);
Ermitteln ob (120) die gesammelten Informationen anzeigen, dass die erste Hardwarekomponente eingerichtet ist, eine Datenverbindung nur zu einer lokalen Hardwareschnittstelle (222) zu etablieren, die mit einem vordefinierten Typen einer Hardwarekomponente verbindbar ist; und
nur wenn ermittelt ist, dass eine Datenverbindung nur mit einer lokalen Hardwareschnittstelle etabliert werden kann:
• Identifizieren (140) einer zweiten Hardwarekomponente (224) von dem vordefinierten Typ, die lokal mit der ersten Hardwarekomponente verbunden ist;
• Abfragen (150) von Start-Information und/oder Funktionen von der zweiten Hardwarekomponente; und
• Starten (160) des geschützten Softwareprogramms mithilfe der abgefragten Start-Information und/oder Funktionen.

2. Das Verfahren gemäß Anspruch 1,
wobei das Ermitteln Vergleichen der gesammelten Information mit einer Whitelist von erlaubten Geräteeinstellungsparametern, Gerätetreibern und/oder Softwareprogrammen aufweist.

3. Das Verfahren gemäß Anspruch 2,
wobei die Whitelist mindestens ein Geräteeinstellungsparameter und/oder mindestens ein Programm aufweist, der/das genutzt wird zum Etablieren der Datenverbindung zu der lokalen Hardwareschnittstelle.

4. Das Verfahren gemäß Anspruch 2 oder 3,
wobei die Whitelist mindestens einen einer Gruppe von Geräteeinstellungsparametern aufweist, die Gruppe aufweisend oder bestehend aus:
• ein USB-Hostcontroller-Gerätepfad, entsprechend dem Muster:
\\?\pci#ven_xxxx&dev_yyyy&subsys_zzzz&rev_nn#...;
• eine USB-Gerätelokalisierungsinformation, entsprechend dem Muster:
Port_#xxxx.Hub_#yyyy;
• eine USB-Gerätelokalisierungsinformation, entsprechend dem Muster:
aaaa.bbbb.cccc.ddd.eee.fff.ggg.hhh.iii;
• eine USB-Gerätelokalisierungspfaden, entsprechend dem Muster:
PCIROOT(w)#PCI(x)#USBROOT(y)#USB(z).

5. Das Verfahren gemäß einem der Ansprüche 1 bis 4, wobei das Ermitteln Vergleichen der gesammelten Informationen mit einer Blacklist von verbotenen Geräteeinstellungsparametern, Gerätetreibern und/oder Softwareprogrammen aufweist, um anzuzeigen, dass die erste Hardwarekomponente eingerichtet ist, eine Datenverbindung mit einer externen Hardwareschnittstelle zu etablieren, die verbindbar zu einem vordefinierten Typen von Hardwarekomponente ist.

6. Das Verfahren gemäß Anspruch 5,
wobei die Blacklist mindestens ein Geräteeinstellungsparameter und/oder mindestens ein Programm aufweist, der/das genutzt wird zum Etablieren der Datenverbindung zu einer Remote- oder virtuellen Hardwareschnittstelle.

7. Das Verfahren gemäß einem der Ansprüche 1 bis 6,
wobei das Ermitteln Vergleichen eines USB-Hostcontroller-Gerätepfads als gesammelte Information mit einem vordefinierten Muster für einen lokalen USB-Hostcontroller und/oder mit einem vordefinierten Muster für einen Remote- oder virtuellen USB-Hostcontroller aufweist.

8. Das Verfahren gemäß Anspruch 7, ferner aufweisend:
Vergleichen einer USB-Lokalisierungsinformation und/oder eines Lokalisierungspfads als gesammelte Information mit einem entsprechenden vordefinierten Muster für einen lokalen USB-Hostcontroller und/oder mit einem vordefinierten Muster für ein Remote- oder virtuelles USB-Gerät.

9. Das Verfahren gemäß einem der Ansprüche 1 bis 8,
wobei die lokale Hardwareschnittstelle integriert ist in oder direkt verbunden ist mit der ersten Hardwarekomponente.

10. Das Verfahren gemäß einem der Ansprüche 1 bis 9,
wobei die Start-Information einen Zugangsschlüssel zu dem geschützten Softwareprogramm aufweist.

11. Eine Hardwarekomponente (200) mit geschütztem Softwareprogramm, eingerichtet um:
Information bezüglich Geräteeinstellungsparametern, Gerätetreibern und/oder Softwareprogrammen, die installiert sind auf und/oder gegenwärtig ausgeführt werden durch der/die Hardwarekomponente, zu sammeln;
zu ermitteln, ob die gesammelte Information anzeigt, dass die erste Hardwarekomponente eingerichtet ist, eine Datenverbindung nur zu einer lokalen Hardwareschnittstelle zu etablieren, die mit einem vordefinierten Typen von Hardware verbindbar ist; und
nur im Fall, dass ermittelt ist, dass eine Datenverbindung nur mit einer lokalen Hardwareschnittstelle (222) etabliert werden kann:
• eine zweite Hardwarekomponente von dem vordefinierten Typen zu identifizieren, die mit der Hardwarekomponente lokal verbunden ist;
• Start-Informationen und/oder Funktionen von der zweiten Hardwarekomponente abzufragen; und
• das geschützte Softwareprogramm unter Verwendung der abgefragten Start-Information und/oder Funktionen zu starten.

12. Die Hardwarekomponente gemäß Anspruch 11,
wobei die Start-Information einen Zugangsschlüssel zu dem geschützten Softwareprogramm aufweist.

13. Die Hardwarekomponente gemäß Anspruch 11 oder 12,
wobei das vordefinierte Hardwaregerät ein Universal-Serial-Bus-, USB-, Dongle ist.

## Revendications

1. Procédé (100) pour protéger un programme logiciel installé sur un premier composant matériel (200) contre toute utilisation non autorisée, ledit procédé étant mis en œuvre sur le premier composant matériel, comprenant :
la collecte (110) d'informations concernant des paramètres de configuration de périphérique, des pilotes de périphérique et/ou des programmes logiciels installés sur et/ou actuellement exécutés par le premier composant matériel (200) ;
le fait de déterminer (120) si les informations collectées indiquent que le premier composant matériel est configuré pour établir une connexion de données uniquement avec une interface matérielle locale (222) pouvant être connectée à un type prédéfini de composant matériel ; et
uniquement s'il est déterminé qu'une connexion de données ne peut être établie qu'avec une interface matérielle locale :
• l'identification (140) d'un deuxième composant matériel (224) du type prédéfini, connecté localement au premier composant matériel ;
• l'extraction (150) d'informations de démarrage et/ou de fonctions du deuxième composant matériel ; et
• le lancement (160) du programme logiciel protégé en utilisant les informations de démarrage et/ou des fonctions extraites.

2. Procédé selon la revendication 1,
dans lequel le fait de déterminer comprend la comparaison des informations collectées avec une liste blanche de paramètres de configuration de périphérique, de pilotes de périphérique et/ou de programmes logiciels autorisés.

3. Procédé selon la revendication 2,
dans lequel la liste blanche comprend au moins un paramètre de configuration de périphérique et/ou au moins un programme utilisé pour établir la connexion de données avec l'interface matérielle locale.

4. Procédé selon la revendication 2 ou 3,
dans lequel la liste blanche comprend au moins l'un parmi un groupe de paramètres de configuration de périphérique, ledit groupe comprenant ou étant constitué de :
• un chemin de périphérique de contrôleur hôte USB, correspondant au modèle :
\\?\pci#ven_xxxx&dev_yyyy&subsys_zzzz&rev_nn#...;
• une information de localisation de périphérique USB, correspondant au modèle :
Port_#xxxx.Hub_#yyyy ;
• une information de localisation de périphérique USB, correspondant au modèle :
aaaa.bbbb.cccc.ddd.eee.fff.ggg.hhh.iii ;
• un chemin de localisation de périphérique USB, correspondant au modèle :
PCIROOT(w)#PCI(x)#USBROOT(y)#USB(z).

5. Procédé selon l'une quelconque des revendications 1 à 4,
dans lequel le fait de déterminer comprend la comparaison des informations collectées avec une liste noire de paramètres de configuration de périphérique, pilotes de périphérique et/ou programmes logiciels interdits, afin d'indiquer que le premier composant matériel est configuré pour établir une connexion de données avec une interface matérielle externe pouvant être connectée à un type prédéfini de composant matériel.

6. Procédé selon la revendication 5,
dans lequel la liste noire comprend au moins un paramètre de configuration de périphérique et/ou au moins un programme utilisé pour établir la connexion de données avec une interface matérielle distante ou virtuelle.

7. Procédé selon l'une quelconque des revendications 1 à 6,
dans lequel le fait de déterminer comprend la comparaison d'un chemin de périphérique de contrôleur hôte USB, en tant qu'information collectée, avec un modèle prédéfini pour un contrôleur hôte USB local et/ou avec un modèle prédéfini pour un contrôleur hôte USB distant ou virtuel.

8. Procédé selon la revendication 7, comprenant en outre :
la comparaison d'informations de localisation USB et/ou d'un chemin de localisation, en tant qu'informations collectées, avec un modèle prédéfini correspondant pour un contrôleur hôte USB local et/ou avec un modèle prédéfini pour un périphérique USB distant ou virtuel.

9. Procédé selon l'une quelconque des revendications 1 à 8,
dans lequel l'interface matérielle locale est intégrée au premier composant matériel ou directement connectée à celui-ci.

10. Procédé selon l'une quelconque des revendications 1 à 9,
dans lequel les informations de démarrage comprennent une clé d'accès au programme logiciel protégé.

11. Composant matériel (200) comportant un programme logiciel protégé, configuré pour :
collecter des informations concernant des paramètres de configuration de périphérique, des pilotes de périphérique et/ou des programmes logiciels qui sont installés sur et/ou actuellement exécutés par le composant matériel ;
déterminer si les informations collectées indiquent que le premier composant matériel est configuré pour établir une connexion de données uniquement avec une interface matérielle locale pouvant être connectée à un type prédéfini de composant matériel ; et
uniquement dans un cas où il est déterminé qu'une connexion de données ne peut être établie qu'avec une interface matérielle locale (222) :
• identifier un deuxième composant matériel (224) du type prédéfini, connecté localement au composant matériel ;
• extraire des informations de démarrage et/ou des fonctions du deuxième composant matériel ; et
• lancer le programme logiciel protégé en utilisant les informations de démarrage et/ou des fonctions extraites.

12. Composant matériel selon la revendication 11,
dans lequel les informations de démarrage comprennent une clé d'accès au programme logiciel protégé.

13. Composant matériel selon la revendication 11 ou 12,
dans lequel le périphérique matériel prédéfini est un dongle USB, Universal Serial Bus.
